# DEMANDE DE BREVET EUROPEEN

(11) **EP 0 733 864 A1**
(43) Date de publication de la demande: **25.09.1996**
(21) Numéro de dépôt: 95470012.6
(22) Date de dépôt: 20.03.1995
(51) Int. Cl.: F24D 3/14

(54) **Système de montage d'éléments de chauffage par le sol et panneau isolant pour un tel système**

(71) Demandeur: Elles, Yves Michel Robert, F-33950 Lege, Cap Ferret (FR)
(72) Inventeur: Elles, Yves Michel Robert, F-33950 Lege, Cap Ferret (FR)
(74) Mandataire: Schmit, Christian Norbert Marie

(57) **Abrégé**

Un treillis disposé sur une des faces du panneau isolant (1) est constitué de deux séries de fils, au moins l'une des séries étant composée de paires (2, 3) de fils parallèles, les deux fils de chaque paire étant situés sensiblement dans un même plan parallèle à la surface du panneau et des agrafes (20) de maintien d'éléments de chauffage comportent une tige (8) pouvant s'insérer entre les dits fils, la distance entre les deux fils d'une même paire étant sensiblement égale ou légèrement inférieure au diamètre de la dite tige d'agrafe.

Application notamment à l'industrie du bâtiment.

## Description

Une installation de chauffage de bâtiments par le sol comprend généralement de bas en haut une dalle, une isolation thermique et éventuellement phonique, une pellicule protectrice, un treillis métallique muni d'agrafe-supports destinées à retenir un circuit tubulaire pour du fluide caloporteur, une chape flottante et un revêtement.

L'isolation est constituée de panneaux qui doivent avoir une certaine épaisseur pour conserver leur rigidité. Le montage du treillis s'effectue après avoir monté les panneaux isolants et le film protecteur, ce qui pose le problème du maintien en place du treillis, notamment en hauteur, avec des risques que les conduits de chauffage se retrouvent, une fois la chape réalisée, plus ou moins proches de sa surface.

Il est également connu d'utiliser des panneaux isolants incorporant une feuille en matériau synthétique à mailles fines ou préperforée, permettant de poser les agrafes en les insérant dans le panneau, les agrafes s'ancrant dans les dites mailles ou dans les perforations. Mais ces panneaux présentent l'inconvénient d'un manque de rigidité et d'une certaine fragilité lors de leur manipulation.

L'invention a pour but de résoudre ces problèmes et vise en particulier à fournir un système de mise en place de chauffage par le sol qui assure un bon positionnement des conduits de chauffage, les éléments utilisés alliant une grande rigidité à une grande facilité de pose et de fixation des dits conduits.

Avec ces objectifs en vue, l'invention a pour objet un système de montage d'éléments de chauffage par le sol comprenant au moins un panneau en matière thermiquement isolante, un treillis disposé sur une des faces du panneau et lié à celui-ci, et des agrafes de maintien des dits éléments de chauffage, fixées sur le dit treillis, caractérisé en ce que le treillis est constitué de deux séries de fils, au moins l'une des séries étant composée de paires de fils parallèles, les deux fils de chaque paire étant situés sensiblement dans un même plan parallèle à la surface du panneau et les dites agrafes comportent une tige pouvant s'ancrer entre les dits fils, la distance entre les deux fils d'une même paire étant sensiblement égale ou légèrement inférieure au diamètre de la dite tige d'agrafe.

L'invention permet ainsi, grâce à l'utilisation d'un treillis comportant des paires de fils parallèles rapprochés en liaison avec les panneaux isolants, d'assurer une grande rigidité au système et donc en particulier un positionnement correct des conduits de chauffage fixés sur le treillis, tout en assurant une grande facilité de pose des agrafes et des conduits. L'utilisation de paires de fils non seulement améliore la rigidité mais aussi permet de mettre en place aisément des agrafes de conception très simple, en les insérant simplement entre les deux fils d'une même paire. De plus, la tige des agrafes étant solidement ancrée entre les fils empêche tout écartement ultérieur des conduits par rapport aux panneaux lors de leur pose et de la réalisation de la chape.

Par rapport à l'utilisation d'un treillis à simple fil, qui nécessiterait des mailles de très petite dimension pour pouvoir utiliser ce type d'agrafage, le nombre de fils peut être fortement réduit, et donc leur section augmentée sans accroître le poids du treillis, une plus grande section des fils étant par ailleurs également favorable à la rigidité. On notera encore que l'amélioration de rigidité obtenue grâce à ce type de treillis permet de réduire l'épaisseur du panneau isolant.

Préférentiellement, le treillis est fixé rigidement au panneau, en particulier en étant incorporé de moulage à la dite face du panneau, tout en affleurant à sa surface, ce qui permet de renforcer considérablement le panneau, non seulement à la pose mais également lors de sa manipulation ou de son transport. On peut se contenter d'un panneau plus mince, tout en ayant une meilleure rigidité. Comme le treillis affleure à la surface du panneau, il reste visible lors de la pose du circuit de chauffage et le positionnement des agrafes peut être réalisé sans difficulté et de manière sure entre les deux fils d'une paire.

L'invention a aussi pour objet un panneau en matière thermiquement isolante, comprenant un treillis disposé sur une des faces du panneau et lié à celui-ci, caractérisé en ce que le treillis est constitué de deux séries de fils, au moins l'une des séries étant composée de paires de fils parallèles, les deux fils de chaque paire étant situés sensiblement dans un même plan parallèle à la surface du panneau et la distance entre les deux fils d'une même paire étant inférieure à la distance entre deux paires adjacentes.

On peut fabriquer simplement le panneau suivant l'invention en mettant un tel treillis métallique au fond d'un moule de moulage d'un panneau et en versant la matière isolante dans le moule au-dessus du treillis.

La matière isolante peut être une matière plastique, notamment du polystyrène ou du polyuréthanne, mais également une laine minérale comme de la laine de verre, ou encore du liège ou similaire.

De préférence, chaque panneau comporte au moins un tenon et une mortaise sur les bords de manière à pouvoir être assemblé sans jeu à des panneaux adjacents.

De préférence encore, un fil de treillis est incorporé juste au bord sur tous les côtés du panneau, ce qui permet de relier et maintenir efficacement deux panneaux posés adjacents, par tout moyen d'agrafage adapté pour relier les dits fils de bords de panneau.

Les agrafes destinées à agrafer un élément de conduit sur un panneau pourvu d'un treillis conformément à l'invention, comprennent une partie d'agrafage, adaptée pour maintenir lesdits éléments, reliée à la tige qui s'insère entre les fils et comporte des moyens d'ancrage sur ceux-ci. Cette tige a préférentiellement une extrémité pointue pour faciliter son insertion et sa pénétration dans le matériau isolant du panneau. Pour monter l'agrafe sur le treillis, il suffit de la piquer à la main dans le panneau, entre deux fils parallèles rapprochés où elle s'ancre sans possibilité de retrait involontaire.

Pour que l'agrafe soit mieux retenue au treillis, les dits moyens d'ancrage comportent préférentiellement deux lèvres annulaires fixées à la tige à une distance axiale l'une de l'autre supérieure au diamètre d'un fil du treillis. On enfonce la tige dans le panneau jusqu'à ce que les fils du treillis viennent entre les deux lèvres. Pour faciliter cet enfoncement, il est bon que la lèvre inférieure, qui est la plus proche de l'extrémité pointue, ait une face extérieure tronconique se rétrécissant vers l'extrémité pointue, et qu'elle soit de constitution plus souple que la tige de manière que les fils du treillis puissent pénétrer entre les deux lèvres par déformation élastique de la lèvre inférieure. Pour que l'agrafe soit encore mieux fixée au panneau, on peut prévoir, entre la lèvre inférieure et l'extrémité pointue, des crans d'accrochage dans le matériau isolant du panneau.

Pour relever le tube dans lequel circule le fluide caloporteur par rapport au panneau isolant, afin qu'il soit bien noyé dans le béton de la chape sans être trop près du treillis métallique, ce qui est nécessaire pour que la chaleur soit bien répartie, la lèvre supérieure est à distance le long de la tige du bas de la partie d'agrafage en étant, par exemple, à 5 mm de celle-ci et sert ainsi de garde limitant la profondeur de pénétration de la tige dans le panneau.

D'autres caractéristiques et avantages apparaîtront dans la description qui va être faite à titre d'exemple non limitatif, d'un panneau conforme à l'invention. On se reportera aux dessins annexés, dans lesquels :
- la figure 1 est une vue en plan d'un panneau suivant l'invention ;
- la figure 2 en est une vue en coupe ; et
- la figure 3 est une vue de détail à échelle agrandie d'une agrafe de fixation mise en place sur le panneau.

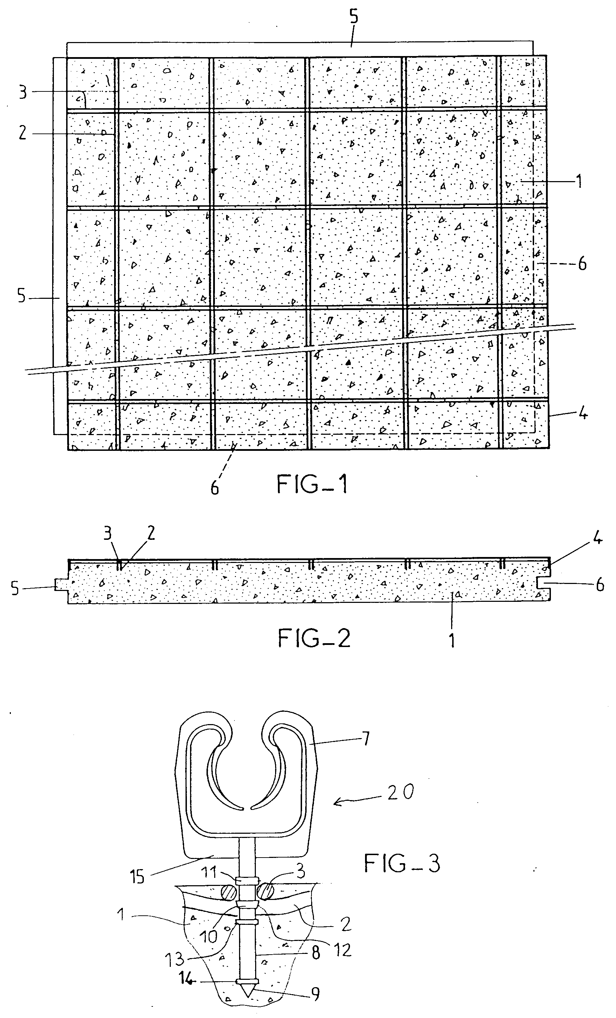

Le panneau représenté aux figures 1 et 2 est une pièce 1 moulée en un matériau isolant thermiquement et phoniquement tel que du polystyrène, sur l'une des faces duquel à été incorporé par moulage un treillis métallique comprenant deux séries perpendiculaires de fils métalliques. Chaque série comprend des paires 2, 3 de fils parallèles et situés dans un plan parallèle à la surface du panneau, et distants par exemple de 5 mm. Chaque paire de fils est à un intervalle très nettement plus grand, par exemple de 100 mm, de la paire de fils voisines. Un fil métallique 4 court sur les bords de la face supérieure du panneau, sur laquelle apparaît le treillis. Un tenon 5 est ménagé sur deux côtés adjacents du panneau, tandis qu'une mortaise 6 est ménagée sur les deux autres côtés adjacents.

On notera que, dans une variante de réalisation, seule une série de fils, celle située le plus vers l'extérieur du panneau, est formée de paires de fils rapprochés, l'autre série de fils étant formée de fils simples. Dans les deux cas, les paires de fils affleurent juste sur la face du matériau isolant, alors que les fils de l'autre série sont au moins partiellement noyés dans le matériau isolant au niveau de leurs intersections avec les fils arrangés par paire, ce qui renforce l'adhérence entre le treillis et le matériau isolant.

L'agrafe 20 représentée à la figure 3 comprend une partie 7 d'agrafage destinée à recevoir un tube dans lequel circule un fluide caloporteur. La partie 7 est reliée à une tige 8 dont l'extrémité 9 est pointue. La tige est en une matière plastique dure telle que du polyamide ou de l'ABS. Une lèvre inférieure 10 et une lèvre supérieure 11 sont fixées à la tige 8 à une distance l'une de l'autre voisine du diamètre d'un fil du treillis. La lèvre supérieure 11 peut être en la même matière que la tige 8 et venir d'injection avec elle, tandis que la lèvre inférieure 10 est en un matériau plus souple que celui de la tige 8, par exemple en un polyamide plus souple. La face 12 extérieure de la lèvre inférieure 10 est tronconique en se rétrécissant vers l'extrémité 9 pointue. Des crans 13, 14 d'accrochage sont prévus sur la tige entre la lèvre inférieure 10 et l'extrémité 9 pointue. Les crans comme les lèvres font le tour de la tige.

La lèvre supérieure 11 est à distance du bas 15 de la partie d'agrafage 7, pour espacer le tuyau placé dans l'agrafe d'une distance appropriée au dessus du panneau.

D'autres types d'agrafes pourront aussi être utilisées, par exemple des agrafes ayant une tige de diamètre légèrement supérieur à la distance entre les deux fils d'une paire, les tiges des agrafes étant alors en un matériau déformable élastiquement et insérées à force entre les fils.

Le treillis pourrait aussi être fixé à la surface des panneaux par exemple par des moyens d'ancrage dans le matériau isolant ou par tout autre moyen susceptible d'assurer une liaison adhérente entre les fils métalliques et le dit matériau.

## Revendications

1. Système de montage d'éléments de chauffage par le sol comprenant au moins un panneau (1) en matière thermiquement isolante, un treillis disposé sur une des faces du panneau et lié à celui-ci et des agrafes (20) de maintien des dits éléments de chauffage, fixées sur le dit treillis, caractérisé en ce que le treillis est constitué de deux séries de fils, au moins l'une des séries étant composée de paires (2, 3) de fils parallèles, les deux fils de chaque paire étant situés sensiblement dans un même plan parallèle à la surface du panneau et les dites agrafes comportent une tige (8) pouvant s'ancrer entre les dits fils, la distance entre les deux fils d'une même paire étant sensiblement égale ou légèrement inférieure au diamètre de la dite tige d'agrafe.

2. Système selon la revendication 1, caractérisé en ce que le treillis est fixé rigidement au panneau.

3. Système selon la revendication 1, caractérisé en ce que le treillis est incorporé de moulage à la dite face du panneau, et affleure à sa surface.

4. Système selon l'une quelconque des revendications précédentes caractérisé en ce que les agrafes (20) comprennent une partie (7) d'agrafage, adaptée pour maintenir les dits éléments de chauffage, reliée à la dite tige (8), la tige comportant des moyens d'ancrage (10, 11) sur les fils du treillis.

5. Système selon la revendication 4, caractérisé en ce que les dits moyens d'ancrage comportent deux lèvres annulaires (10, 11) fixées à la tige (8) à une distance axiale l'une de l'autre voisine ou supérieure au diamètre d'un fil du treillis.

6. Système selon la revendication 5, caractérisé en ce que la lèvre inférieure (10) a une face extérieure (12) tronconique se rétrécissant vers l'extrémité de la tige.

7. Système selon la revendication 5, caractérisé en ce que la lèvre supérieure (11) est à distance le long de la tige (8) du bas (15) de la partie (7) d'agrafage.

8. Panneau en matière thermiquement isolante, comprenant un treillis disposé sur une des faces du panneau (1) et lié à celui-ci, caractérisé en ce que le treillis est constitué de deux séries de fils, au moins l'une des séries étant composée de paires (2, 3) de fils parallèles, les deux fils de chaque paire étant situés sensiblement dans un même plan parallèle à la surface du panneau et la distance entre les deux fils d'une même paire étant inférieure à la distance entre deux paires adjacentes.

9. Panneau selon la revendication 8, caractérisé en ce que le treillis est incorporé de moulage à la dite face du panneau, et affleure à sa surface.

10. Panneau suivant l'une des revendications 8 ou 9, caractérisé par un fil métallique (4) sur les bords de la face du panneau comportant le treillis.
